# EUROPEAN PATENT SPECIFICATION

(11) **EP 2 001 067 B1**
(45) Date of publication and mention of the grant of the patent: **11.08.2010**
(21) Application number: 07109220.9
(22) Date of filing: 30.05.2007
(51) Int. Cl.: H01M 2/10, H01M 2/04, H01M 10/42

(54) **Packaging process for slim batteries**
Verpackungsverfahren für dünne Batterien
Procédé de conditionnement de batteries minces

(43) Date of publication of application: 10.12.2008
(73) Proprietor: Simplo Technology Co., Ltd., Taiwan (CN)
(72) Inventor: Shieh, Jan-Shyang, Hsinchu Hsien (TW)
(74) Representative: Viering, Jentschura & Partner

(56) References cited:
- US-A1- 2005 130 030
- US-B1- 6 225 778

## Description

### BACKGROUND OF THE INVENTION

### 1. Field of the Invention

The present invention relates to a packaging process and products thereof. In particular, this invention relates to a packaging process and products applied to a slim battery can produce an excellent packaging effect.

### 2. Description of the Related Art

Batteries used for multi-media electronic devices, such as digital still cameras, cell phones, and PDAs, usually receive the battery module in a housing wrapped with a layer of label. The label wraps the housing to prevent the housing from becoming loose. The battery module is easily exposed without label's protection. Thus, it could be dangerous when anyone uses it. It is also necessary to use glue to package the battery module.

However, the label wrapping the housing is easily aged and broken so that the housing loosens and the battery module becomes exposed. If the safety of the battery module is bad, anyone may get hurt by using it. Furthermore, the label increases the cost of the required materials, makes the assembling process more inconvenient, and increases the total thickness of the battery. It also does not meet design trends and consumer demands for slimmer and smaller electronic devices.

US 2005/130030 A1 discloses a battery apparatus including a battery unit, a metal upper case provided with fixing pieces, a plastic frame provided with slits though which the fixing pieces are made to pass, and a lower metal case provided with fixing pieces.

US-B1-6 225 778 discloses a battery pack having an upper case comprising a frame and a metal plate and a lower case comprising a frame and a metal plate. The battery pack further comprises a flat battery and a circuit board.

### SUMMARY OF THE INVENTION

The main purpose of the present invention is to provide a packaging process for slim batteries and products thereof. The packaging effect is excellent, and the amount of label is reduced. The problems of the label ageing and breaking, the housing looseness, and the battery module exposure are avoided. Thus, the safety of the battery becomes better and being thinner meets the trend of the battery module design.

The packaging process for slim batteries includes providing a first board made of metal material. The surrounding edge of the first board extends to form a plurality of first jointing flakes. A frame made of plastic material is formed by an insert molding method and is combined with the first board. The frame has a plurality of side walls, and there is a plurality of jointing slots on the side walls. The first jointing flakes of the first board are embedded into the side walls of the frame to fasten the first board onto the bottom of the frame. A battery module is provided. The battery module includes at least one battery, and a circuit board that is electrically connected with the battery. The battery and the circuit board are placed into the frame, and the battery is located on the first board. A second board made of metal material is provided. The surrounding edge of the second board extends to form a plurality of second jointing flakes. The second jointing flakes are combined with the jointing slots by an ultrasonic method to fasten the second board onto the top of the frame.

The present invention has the following characteristics. The first board is combined with the frame by using the insert molding method, and the second board is combined with the frame by the ultrasonic method. It is convenient for packaging the battery. The packaging effect is excellent. The label is not required. The required quantity of the label is reduced, and the packaging process is simple. The problems of the label ageing and breaking, the housing looseness, and the battery module exposure are avoided. It is safe, and the yield rate is improved. The cost of components and the required working hours are reduced so that the manufacturing cost is reduced.

Furthermore, because the second board and the frame are connected together by ultrasonic, the total thickness of the second board and the frame are reduced so that the thickness of the battery decreases. Becoming thinner and smaller meet the requirements of electronic product design.

For further understanding of the invention, reference is made to the following detailed description illustrating the embodiments and examples of the invention. The description is only for illustrating the invention and is not intended to be considered limiting of the scope of the claim.

### BRIEF DESCRIPTION OF THE DRAWINGS

The drawings included herein provide a further understanding of the invention. A brief introduction of the drawings is as follows:
FIG. 1 is a flow chart of the packaging process for slim batteries of the present invention;

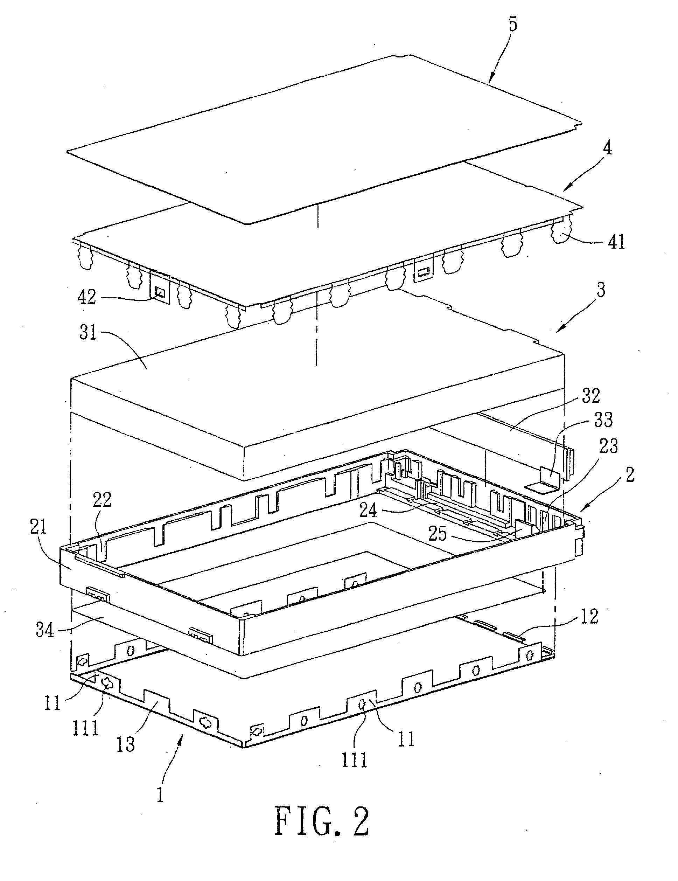

FIG. 2 is an exploded perspective view of a product using the packaging process for slim batteries of the present invention;

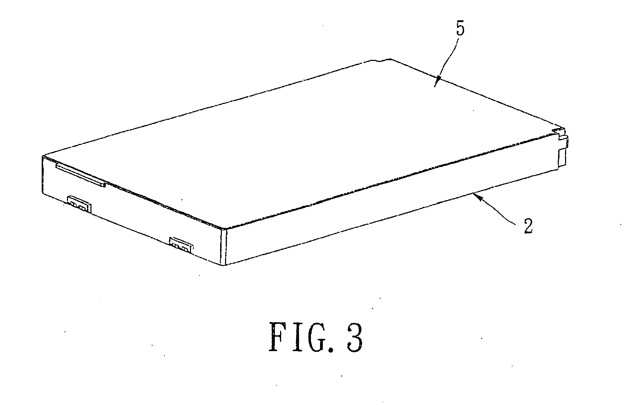

FIG. 3 is a perspective view of a product using the packaging process for slim batteries of the present invention;
FIG. 4 is a cross-sectional view of part of the product using the packaging process for slim batteries of the present invention; and
FIG. 5 is another cross-sectional view of part of the product using the packaging process for slim batteries of the present invention.

### DETAILED DESCRIPTION OF THE PREFERRED EMBODIMENTS

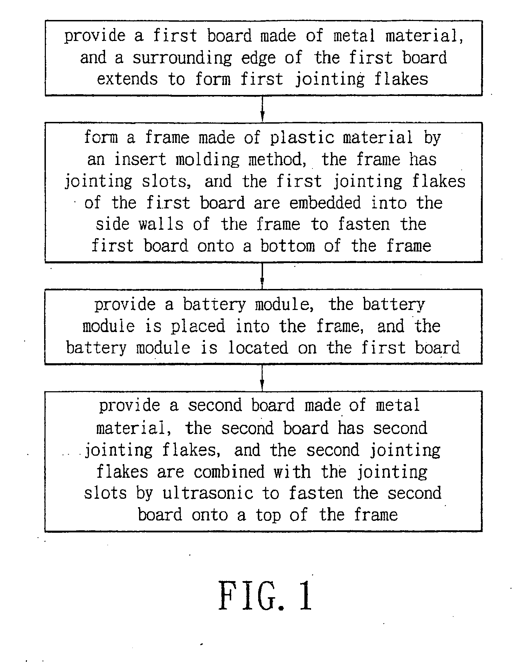

Reference is made to FIG. 1, which shows a flow chart of the packaging process for slim batteries of the present invention. The slim battery can be applied to a variety of multi-media electronic devices, such as digital still cameras, cell phones, and PDAs. The packaging process includes:
(a) A first board 1 made of metal material, such as a stainless steel, is provided. The first board 1 is a rectangular board. The thickness of the first board 1 is between 0,1mm~0.15mm. The surrounding edge of the first board 1 bends upwards to form a plurality of first jointing flakes 11. Each of the first jointing flakes 11 has a through hole 111. The surrounding edge of the first board 1 bends and extends to form a plurality of bending flakes 12 and at least one contacting flake 13. In this embodiment, the bending flakes 12 are located on one side of the first board 1, and the first jointing flakes 11 are located on the other three sides of the first board 1. The location and number of the first jointing flakes 11, the bending flakes 12 and the contacting flake 13 are not limited to the above case, and depend on the requirements.
(b) The first board 1 is placed into an insert-molding mold. By using the insert molding method, a frame 2 made of plastic material is formed and combined with the first board 1. The frame 2 is a rectangular frame that is formed by four side walls 21. The outline of the frame 1 corresponds to the first board 1. The first jointing flakes 11 and the bending flakes 12 on the surrounding edge of the first board 1 are embedded into the four side walls 21 of the frame 2 to fasten the first board 1 onto the bottom of the frame 2. When the frame 2 is being molded, the plastic material enters the through holes 111 of the first jointing flakes 11 so that the first board 1 is firmly combined with the frame 2.
   There is a plurality of jointing slots 22 on the side walls 21. The jointing slots 22 are disposed on the side walls at intervals. The jointing slots 22 pass through the top of the side walls 21. One side wall 21 of the frame 2 has a plurality of opening holes 23. The opening holes pass through the inner side and the outer side of the frame 2 so that the electric jointing points of the battery module 3 in the frame 2 can be exposed to an outside of the frame 2.
   A horizontal carry board 24 is formed on the side wall 21 having the opening holes 23 of the frame 2. There is at least one blocking wall 25 protruding from the carry board 24. There is a proper distance between the blocking wall 25 and the side wall 21 so that the circuit board 32 of the battery module 3 can be placed into the gap.
(c) A battery module 3 is provided. The battery module 3 includes at least one battery 31, and a circuit board 32. The battery 31 is electrically connected with the circuit board 32 via an Ni-metal flake 33.
   The battery 31 and the circuit board 32 are placed into the frame 2, and the battery 31 is carried on the first board 1. There is a twin adhesive 34 between the top of the first board 1 and the bottom of the battery 31 so that the battery 31 is pasted on the first board 1.
   The circuit board 32 is placed on the carry board 24 and is clipped between the blocking wall 25 and the side wall 21. The side wall 21 and the blocking wall 23 are used for preventing the circuit board 32 from moving forwards and backwards. The left side and the right side of the circuit board 32 push and contact the inner side of the other two side walls 21 for preventing the circuit board 32 from moving left and right. Thereby, the circuit board 32 is firmly positioned in the frame 2, and the circuit board 32 is adjacent to the opening hole 23 so that the electrical jointing points (not shown in the figure) of the battery module 3 are exposed to an outside of the frame 2 via the opening hole 23.
(d) A second board 4 made of metal material, such as stainless steel, is provided. The second board 4 is a rectangular board that corresponds to the frame 2. The thickness of the second board 4 is between 0.1mm~0.15mm. The surrounding edge of the second board 4 bends downwards to form a plurality of second jointing flakes 41. The second jointing flakes 41 correspond to the jointing slots 22 of the frame 2. Two sides of the second jointing flakes 41 are tooth-shaped.

The second jointing flakes 41 are connected with the jointing slots 22 by using ultrasonic to fasten the second board 4 onto the top of the frame 2. The second board 4 covers the battery module 3. The frame 2, the first board 1 and the second board 4 form a housing to package the battery module 3. When the second board 4 is assembled on the top of the frame 2, one end of the second board 4 is pressed on the top of the circuit board 32. The second board 4 and the carry board 24 are used for preventing the circuit board 32 from moving upwards and downwards so that the circuit board 32 is firmly positioned in the frame 2.

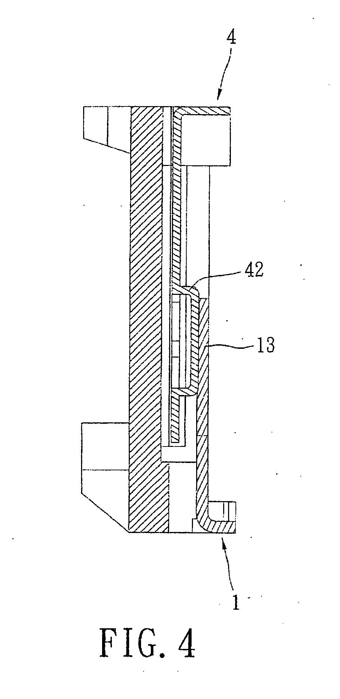

At least one convex portion 42 that corresponds to the contacting flake 13 extends from the surrounding edge of the second board 4. The convex portion 42 contacts the contacting flake 13 of the first board 1 (as shown in FIG. 4) so that a shielding is formed between the second board 4 and the first board 1 to provide an EMI (electromagnetic interference) shielding effect. The second board 4 also further includes a grounding flake (not shown in the figure) to make the circuit board 32 be grounded with the grounding to provide an EMI shielding effect.

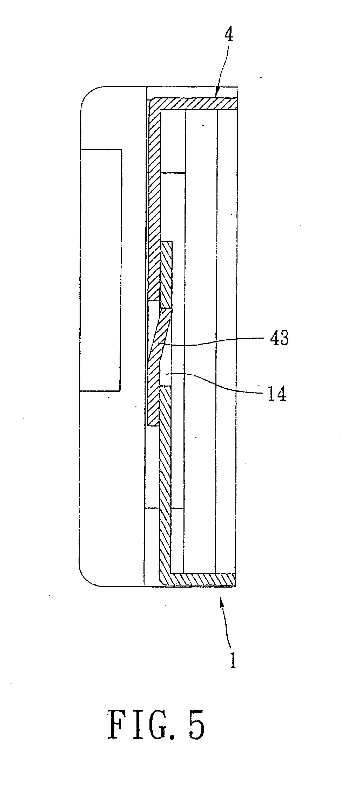

Furthermore, reference is made to FIG. 5. The surrounding edge of the first board 1 extends to form at least one wedging hole 14, and the surrounding edge of the second board 4 extends to form at least one wedging flake 43 that corresponds to the wedging hole 14. The wedging flake 43 wedges and contacts the wedging hole 14 so that a shielding is formed between the second board 4 and the first board 1 to provide an EMI shielding effect.

In the present invention, a label 5 is further pasted onto the external surface of the first board 1 or the second board 4. The label is labeled with the electrical characteristics of the battery. Alternatively, the label can be omitted. The electrical characteristics of the battery can be carved on the external surface of the first board 1 or the second board 4 by laser. Thereby, the total thickness of the battery is thinner.

The first board 1 is combined with the frame 2 by using the insert molding method, and the second board 4 is combined with the frame 2 by an ultrasonic method. Thereby, the first board 1, the second board 4 and the frame 2 form a firm housing. It is convenient for packaging the battery. The packaging effect is excellent. The label is not required again or only a few pieces of label are pasted on part of the surface (the first board 1 or the second board 4). The required quantity of the label is reduced, and the packaging process is simple. The problems of the label ageing and breaking, the housing looseness, and the battery module exposure are avoided. It is safe, and the yield rate is improved. The cost of the components and the working hours are reduced so that manufacturing costs are reduced.

Furthermore, because the second board 4 and the frame 2 are connected together by supersonic, the total thickness of the second board 4 and the frame 2 are reduced so that the thickness of the battery is lowered. It meets the requirements of electronic devices being slim and small.

The description above only illustrates specific embodiments and examples of the invention. The invention should therefore cover various modifications and variations made to the herein-described structure and operations of the invention, provided they fall within the scope of the invention as defined in the following appended claims.

## Claims

1. A packaging process for slim batteries, comprising:
providing a first board made of metal material wherein a surrounding edge of the first board extends to form a plurality of first jointing flakes;
combining a frame made of plastic material formed by an insert molding method with the first board, wherein the frame has a plurality of side walls and there is a plurality of jointing slots on the side walls, and the first jointing flakes of the first board are embedded into the side waits of the frame to fasten the first board onto a bottom of the frame;
providing a battery module, wherein the battery module includes at least one battery and a circuit board that is electrically connected with the battery, the battery and the circuit board are placed into the frame, and the battery is located on the first board; and
providing a second board made of metal material, wherein a surrounding edge of the second board extends to form a plurality of second jointing flakes, and the second jointing flakes are combined with the jointing slots by ultrasonic to fasten the second board onto a top of the frame.

2. The packaging process for slim batteries as claimed in claim 1, wherein the surrounding edge of the first board extends to form a plurality of bending flakes, and the bending flakes are embedded into a side wall of the frame.

3. The packaging process for slim batteries as claimed in claim 1, wherein the first board has at least one contacting flake, the second board has at least one convex portion, and the convex portion contacts the contacting flake.

4. The packaging process for slim batteries as claimed in claim 1, wherein the first board has at least one wedged hole, the second board has at least one wedged flake, and the wedged flake wedges and contacts the wedged hole.

5. The packaging process for slim batteries as claimed in claim 1, wherein an external surface of the first board or the second board is pasted with a label.

6. The packaging process for slim batteries as claimed in claim 1, wherein a twin adhesive is located between a top of the first board and a bottom of the battery to paste the battery on the first board.

7. The packaging process for slim batteries as claimed in claim 1, wherein one side wall of the frame has a plurality of opening holes, and the circuit board is adjacent to the opening hole.

8. The packaging process for slim batteries as claimed in claim 1, wherein an inner surface of one side wall of the frame forms a carry board, at least one blocking wall protrudes from the carry board so that the circuit board is placed on the carry board, the circuit board is clipped between the blocking wall and one side wall, two sides of the circuit board push and contact an inner side of the other two side walls, and one end of the second board is pressed on a top of the circuit board.

9. A product made by using a packaging process for slim batteries, comprising:
a first board made of metal material, wherein a surrounding edge of the first board extends to form a plurality of first jointing flakes;
a frame made of plastic material, wherein the frame is combined with the first board by an insert molding method, the frame has a plurality of side walls and there is a plurality of jointing slots on the side walls, and the first jointing flakes of the first board are embedded into the side walls of the frame to fasten the first board onto a bottom of the frame;
a battery module, wherein the battery module includes at least one battery and a circuit board that is electrically connected with the battery, the battery and the circuit board are placed into the frame, and the battery is located on the first board; and
a second board made of metal material, wherein a surrounding edge of the second board extends to form a plurality of second jointing flakes, and the second jointing flakes are combined with the jointing slots by ultrasonic to fasten the second board onto a top of the frame.

10. The product made by using a packaging process for slim batteries as claimed in claim 9, wherein the surrounding edge of the first board extends to form a plurality of bending flakes, and the bending flakes are embedded into a side wall of the frame.

11. The product made by using a packaging process for slim batteries as claimed in claim 9, wherein the first board has at least one contacting flake, the second board has at least one convex portion, and the convex portion contacts the contacting flake.

12. The product made by using a packaging process for slim batteries as claimed in claim 9, wherein the first board has at least one wedged hole, the second board has at least one wedged flake, and the wedged flake wedges and contacts the wedged hole.

13. The product made by using a packaging process for slim batteries as claimed in claim 9, wherein an external surface of the first board or the second board is pasted with a label.

14. The product made by using a packaging process for slim batteries as claimed in claim 9, wherein a twin adhesive is located between a top of the first board and a bottom of the battery to paste the battery on the first board.

15. The product made by using a packaging process for slim batteries as claimed in claim 9, wherein one side wall of the frame has a plurality of opening holes, and the circuit board is adjacent to the opening hole.

16. The product made by using a packaging process for slim batteries as claimed in claim 9, wherein an inner surface of one side wall of the frame forms a carry board, at least one blocking wall protrudes from the carry board so that the circuit board is placed on the carry board, the circuit board is clipped between the blocking wall and one side wall, two sides of the circuit board push and contact an inner side of the other two side walls, and one end of the second board is pressed on a top of the circuit board.

## Patentansprüche

1. Verpackungsverfahren für dünne Batterien, aufweisend:
Bereitstellen einer ersten Tafel, die aus metallischem Material hergestellt ist, wobei sich ein umlaufender Rand der ersten Tafel erstreckt, um eine Mehrzahl erster Verbindungsblättchen zu bilden;
Verbinden eines Rahmens aus Kunststoff-Material, der durch ein Umspritzverfahren gebildet ist, mit der ersten Tafel, wobei der Rahmen eine Mehrzahl von Seitenwänden aufweist, wobei es eine Mehrzahl von Verbindungsschlitzen an den Seitenwänden gibt, wobei die ersten Verbindungsblättchen der ersten Tafel zum Befestigen der ersten Tafel an einer Unterseite des Rahmens in die Seitenwände des Rahmens eingebettet sind;
Bereitstellen eines Batteriemoduls, wobei das Batteriemodul wenigstens eine Batterie und eine Schaltkreisplatine, die mit der Batterie elektrisch verbunden ist, aufweist, wobei die Batterie und die Schaltkreisplatine in dem Rahmen platziert sind und die Batterie auf der ersten Tafel angeordnet ist; und
Bereitstellen einer zweiten Tafel, die aus metallischem Material hergestellt ist, wobei sich ein umlaufender Rand der zweiten Tafel erstreckt, um eine Mehrzahl von zweiten Verbindungsblättchen zu bilden, wobei die zweiten Verbindungsblättchen mit den Verbindungsschlitzen durch Ultraschall verbunden werden, um die zweite Tafel auf einer Oberseite des Rahmens zu befestigen.

2. Verpackungsverfahren für dünne Batterien gemäß Anspruch 1, wobei sich der umlaufende Rand der ersten Tafel erstreckt, um eine Mehrzahl von gebogenen Blättchen zu bilden und die gebogenen Blättchen in eine Seitenwand des Rahmens eingebettet sind.

3. Verpackungsverfahren für dünne Batterien gemäß Anspruch 1, wobei die erste Tafel wenigstens ein Verbindungsblättchen aufweist, die zweite Tafel wenigstens einen konvexen Abschnitt aufweist, und der konvexe Abschnitt das Verbindungsblättchen kontaktiert.

4. Verpackungsverfahren für dünne Batterien gemäß Anspruch 1, wobei die erste Tafel wenigstens eine Keilöffnung aufweist, die zweite Tafel wenigstens ein Keilblättchen aufweist, und das Keilblättchen in der Keilöffnung verkeilt ist und diese kontaktiert.

5. Verpackungsverfahren für dünne Batterien gemäß Anspruch 1, wobei eine äußere Fläche der ersten Tafel oder der zweiten Tafel mit einer Beschriftung beklebt ist.

6. Verpackungsverfahren für dünne Batterien gemäß Anspruch 1, wobei ein doppelseitiges Klebemittel zum Kleben der Batterie auf die erste Tafel zwischen einer Oberseite der ersten Tafel und einer Unterseite der Batterie angeordnet ist.

7. Verpackungsverfahren für dünne Batterien gemäß Anspruch 1, wobei eine Seitenwand des Rahmens eine Mehrzahl von Öffnungen aufweist und die Schaltkreisplatine der Öffnung benachbart ist.

8. Verpackungsverfahren für dünne Batterien gemäß Anspruch 1, wobei eine innere Fläche einer Seitenwand des Rahmens eine Tragetafel bildet, wenigstens eine Blockierwand von der Tragetafel hervorsteht, so dass die Schaltkreisplatine auf der Tragetafel angeordnet ist, die Schaltkreisplatine zwischen die Blockierwand und eine Seitenwand gesteckt ist, zwei Seiten der Schaltkreisplatine an eine Innenseite der anderen beiden Seitenwände gedrückt sind und diese kontaktieren, und ein Ende der zweiten Tafel auf eine Oberseite der Schaltkreisplatine gepresst ist.

9. Produkt hergestellt unter Verwendung eines Verpackungsverfahrens für dünne Batterien, aufweisend:
eine erste Tafel, die aus metallischem Material hergestellt ist, wobei sich ein umlaufender Rand der ersten Tafel erstreckt, um eine Mehrzahl erster Verbindungsblättchen zu bilden;
ein Rahmen aus Kunststoff-Material, wobei der Rahmen mit der ersten Tafel durch ein Umspritzverfahren verbunden ist, wobei der Rahmen eine Mehrzahl von Seitenwänden aufweist, wobei es eine Mehrzahl von Verbindungsschlitzen an den Seitenwänden gibt, wobei die ersten Verbindungsblättchen der ersten Tafel zum Befestigen der ersten Tafel an einer Unterseite des Rahmens in die Seitenwände des Rahmens eingebettet sind;
ein Batteriemodul, wobei das Batteriemodul wenigstens eine Batterie und eine Schaltkreisplatine, die mit der Batterie elektrisch verbunden ist, aufweist, wobei die Batterie und die Schaltkreisplatine in dem Rahmen platziert sind, und die Batterie auf der ersten Tafel angeordnet ist; und
eine zweite Tafel, die aus metallischem Material hergestellt ist, wobei sich ein umlaufender Rand der zweiten Tafel erstreckt, um eine Mehrzahl von zweiten Verbindungsblättchen zu bilden, wobei die zweiten Verbindungsblättchen mit den Verbindungsschlitzen durch Ultraschall verbunden sind, um die zweite Tafel auf einer Oberseite des Rahmens zu befestigen.

10. Produkt hergestellt unter Verwendung eines Verpackungsverfahrens für dünne Batterien gemäß Anspruch 9, wobei der umlaufende Rand der ersten Tafel sich erstreckt, um eine Mehrzahl von gebogenen Blättchen zu bilden und die gebogenen Blättchen in eine Seitenwand des Rahmens eingebettet sind.

11. Produkt hergestellt unter Verwendung eines Verpackungsverfahrens für dünne Batterien gemäß Anspruch 9, wobei die erste Tafel wenigstens ein Verbindungsblättchen aufweist, die zweite Tafel wenigstens einen konvexen Abschnitt aufweist, und der konvexe Abschnitt das Verbindungsblättchen kontaktiert.

12. Produkt hergestellt unter Verwendung eines Verpackungsverfahrens für dünne Batterien gemäß Anspruch 9, wobei die erste Tafel wenigstens eine Keilöffnung aufweist, die zweite Tafel wenigstens ein Keilblättchen aufweist, und das Keilblättchen in der Keilöffnung verkeilt ist und diese kontaktiert.

13. Produkt hergestellt unter Verwendung eines Verpackungsverfahrens für dünne Batterien gemäß Anspruch 9, wobei eine äußere Fläche der ersten Tafel oder der zweiten Tafel mit einer Beschriftung beklebt ist.

14. Produkt hergestellt unter Verwendung eines Verpackungsverfahrens für dünne Batterien gemäß Anspruch 9, wobei ein doppelseitiges Klebemittel zum Kleben der Batterie auf die erste Tafel zwischen einer Oberseite der ersten Tafel und einer Unterseite der Batterie angeordnet ist.

15. Produkt hergestellt unter Verwendung eines Verpackungsverfahrens für dünne Batterien gemäß Anspruch 9, wobei eine Seitenwand des Rahmens eine Mehrzahl von Öffnungen aufweist und die Schaltkreisplatine den Öffnungen benachbart ist.

16. Produkt hergestellt unter Verwendung eines Verpackungsverfahrens für dünne Batterien gemäß Anspruch 9, wobei eine innere Fläche einer Seitenwand des Rahmens eine Tragetafel bildet, wenigstens eine Blockierwand von der Tragetafel hervorsteht, so dass die Schaltkreisplatine auf der Tragetafel angeordnet ist, die Schaltkreisplatine zwischen die Blockierwand und eine Seitenwand gesteckt ist, zwei Seiten der Schaltkreisplatine an eine Innenseite der anderen beiden Seitenwände gedrückt sind und diese kontaktieren, und ein Ende der zweiten Tafel auf eine Oberseite der Schaltkreisplatine gepresst ist.

## Revendications

1. Procédé de conditionnement de batteries minces, comprenant les étapes consistant à :
fournir un premier panneau réalisé dans un matériau métallique, dans lequel un bord environnant du premier panneau s'étend de manière à former une pluralité de lamelles de jonction ;
combiner un cadre réalisé dans un matériau de matière plastique formé par un procédé de moulage par insertion avec le premier panneau, dans lequel le cadre présente une pluralité de parois latérales et une pluralité de fentes de jonction sur ses parois latérales, et les premières lamelles de jonction du premier panneau sont incorporées dans les parois latérales du cadre de manière à fixer le premier panneau sur le fond du cadre ;
fournir un module de batterie, dans lequel le module de batterie comprend au moins une batterie et une carte de circuit qui est connectée de manière électrique à la batterie, la batterie et la carte de circuit étant placées dans le cadre, et la batterie se situant sur le premier panneau ; et
fournir un deuxième panneau réalisé dans un matériau métallique, dans lequel un bord environnant du deuxième panneau s'étend de manière à former une pluralité de deuxièmes lamelles de jonction, et les deuxièmes lamelles de jonction sont combinées avec les fentes de jonction par des ultrasons de façon à fixer le deuxième panneau sur le dessus du cadre.

2. Procédé de conditionnement de batteries minces selon la revendication 1, dans lequel le bord environnant du premier panneau s'étend de manière à former une pluralité de lamelles fléchies, et les lamelles fléchies sont incorporées dans une paroi latérale du cadre.

3. Procédé de conditionnement de batteries minces selon la revendication 1, dans lequel le premier panneau présente au moins une lamelle de contact, le deuxième panneau présente au moins une partie convexe, et la partie convexe entre en contact avec la lamelle de contact.

4. Procédé de conditionnement de batteries minces selon la revendication 1, dans lequel le premier panneau présente au moins un trou cunéiforme, le deuxième panneau présente au moins une lamelle cunéiforme, et la lamelle cunéiforme s'enfonce et entre en contact avec le trou cunéiforme.

5. Procédé de conditionnement de batteries minces selon la revendication 1, dans lequel une étiquette est collée sur une surface extérieure du premier panneau ou du deuxième panneau.

6. Procédé de conditionnement de batteries minces selon la revendication 1, dans lequel un adhésif double face se situe entre le dessus du premier panneau et le dessous de la batterie de manière à coller la batterie sur le premier panneau.

7. Procédé de conditionnement de batteries minces selon la revendication 1, dans lequel une paroi latérale du cadre présente une pluralité de trous d'ouverture, et la carte de circuit est adjacente aux trous d'ouverture.

8. Procédé de conditionnement de batteries minces selon la revendication 1, dans lequel une surface intérieure d'une paroi latérale du cadre forme un panneau de support, une paroi de blocage au moins fait saillie du panneau de support de telle sorte que la carte de circuit soit placée sur le panneau de support, la carte de circuit est fixée entre la paroi de blocage et une paroi latérale, deux côtés de la carte de circuit poussent un côté intérieur des deux autres parois latérales, et entrent en contact avec celui-ci, et une extrémité du deuxième panneau est pressée sur le dessus de la carte de circuit.

9. Produit réalisé en utilisant un procédé de conditionnement de batteries minces, comprenant :
un premier panneau réalisé dans un matériau métallique, dans lequel un bord environnant du premier panneau s'étend de manière à former une pluralité de lamelles de jonction ;
un cadre réalisé dans un matériau de matière plastique, dans lequel le cadre combiné avec le premier panneau par un procédé de moulage par insertion, le cadre présente une pluralité de parois latérales et une pluralité de fentes de jonction sur ses parois latérales, et les premières lamelles de jonction du premier panneau sont incorporées dans les parois latérales du cadre de manière à fixer le premier panneau sur le fond du cadre ;
un module de batterie, dans lequel le module de batterie comprend au moins une batterie et une carte de circuit qui est connectée de manière électrique à la batterie, la batterie et la carte de circuit étant placées dans le cadre, et la batterie se situe sur le premier panneau ; et
un deuxième panneau réalisé dans un matériau métallique, dans lequel un bord environnant du deuxième panneau s'étend de manière à former une pluralité de deuxièmes lamelles de jonction, et les deuxièmes lamelles de jonction sont combinées avec les fentes de jonction par des ultrasons de façon à fixer le deuxième panneau sur le dessus du cadre.

10. Produit réalisé en utilisant un procédé de conditionnement de batteries minces selon la revendication 9, dans lequel le bord environnant du premier panneau s'étend de manière à former une pluralité de lamelles fléchies, et les lamelles fléchies sont incorporées dans une paroi latérale du cadre.

11. Produit réalisé en utilisant un procédé de conditionnement de batteries minces selon la revendication 9, dans lequel le premier panneau présente au moins une lamelle de contact, le deuxième panneau présente au moins une partie convexe, et la partie convexe entre en contact avec la lamelle de contact.

12. Produit réalisé en utilisant un procédé de conditionnement de batteries minces selon la revendication 9, dans lequel le premier panneau présente au moins un trou cunéiforme, le deuxième panneau présente au moins une lamelle cunéiforme, et la lamelle cunéiforme s'enfonce et entre en contact avec le trou cunéiforme.

13. Produit réalisé en utilisant un procédé de conditionnement de batteries minces selon la revendication 9, dans lequel une étiquette est collée sur une surface extérieure du premier panneau ou du deuxième panneau.

14. Produit réalisé en utilisant un procédé de conditionnement de batteries minces selon la revendication 9, dans lequel un adhésif double face se situe entre le dessus du premier panneau et le dessous de la batterie de manière à coller la batterie sur le premier panneau.

15. Produit réalisé en utilisant un procédé de conditionnement de batteries minces selon la revendication 9, dans lequel une paroi latérale du cadre présente une pluralité de trous d'ouverture, et la carte de circuit est adjacente aux trous d'ouverture.

16. Produit réalisé en utilisant un procédé de conditionnement de batteries minces selon la revendication 9, dans lequel une surface intérieure d'une paroi latérale du cadre forme un panneau de support, une paroi de blocage au moins fait saillie du panneau de support de telle sorte que la carte de circuit soit placée sur le panneau de support, la carte de circuit est fixée entre la paroi de blocage et une paroi latérale, deux côtés de la carte de circuit poussent un côté intérieur des deux autres parois latérales, et entrent en contact avec celui-ci, et une extrémité du deuxième panneau est pressée sur le dessus de la carte de circuit.
